# EUROPEAN PATENT SPECIFICATION

(11) **EP 1 863 222 B1**
(45) Date of publication and mention of the grant of the patent: **17.06.2009**
(21) Application number: 06804934.5
(22) Date of filing: 16.10.2006
(51) Int. Cl.: H04Q 3/00

(54) **A DISASTER RECOVERY SYSTEM AND METHOD OF SERVICE CONTROLLING DEVICE IN INTELLIGENT NETWORK**
KALAMITÄTENBEHEBUNGSSYSTEM UND VERFAHREN ZUR KONTROLLE VON DIENSTEN IM INTELLIGENTEN NETZWERK
SYSTEME ET PROCEDE DE RECUPERATION SUR SINISTRE DE DISPOSITIF DE COMMANDE DE SERVICE DANS UN RESEAU INTELLIGENT

(30) Priority: 26.10.2005 CN 200510116666
(43) Date of publication of application: 05.12.2007
(73) Proprietor: Huawei Technologies Co., Ltd., Longgang District Shenzhen 518129 (CN)
(72) Inventor: CAI, Zhiwei, Shenzhen Guangdong_518129 (CN); WANG, Yuanwen, Shenzhen Guangdong_518129 (CN)
(74) Representative: Körber, Martin Hans
(86) International application number: PCT/CN2006/002713
(87) International publication number: WO 2007/048319

(56) References cited:
- WO-A1-20/05055517
- CN-A- 1 190 833
- CN-A- 1 545 345
- US-A- 6 098 076
- US-B1- 6 169 794
- US-B1- 6 831 914

## Description

### Field of the Technology

The present invention relates to intelligent network technologies, and particularly, to a method and a system for service control device disaster-recovery in an intelligent network.

### Background of the Invention

Service control devices, such as the Service Control Point (SCP) in the telecommunication intelligent network, are key devices in an intelligent network, because they provide services externally and also store the user data of the services. Disaster-recovery networking is needed to guarantee the security of the user data and the reliability of the services. The following two functions are achieved by disaster-recovery networking: a backup device backs up the data of the service control device; and the backup device provides services externally instead of the service control device when the service control device malfunctions. In general, a master device denotes the device providing services externally in normal operations is called a master device, while a backup device denotes the device which provides services externally instead of the master device when the master device malfunctions. The master device and the backup device compose a productive dual-device.

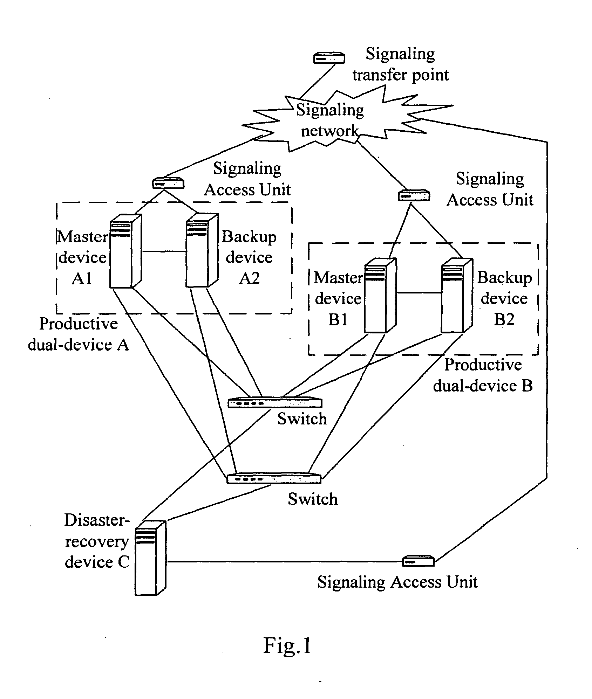

Figure 1 shows an N+1 disaster-recovery network configuration adopted in the prior art when N equals 2. As shown in Figure 1, A1 and B1 are master devices, A2 and B2 are backup devices configured for the master devices. The master device A1 and the backup device A2 compose the productive dual-device A, and the master device B1 and the backup device B2 compose the productive dual-device B. The master device and the corresponding backup device may share the sa me storage device or each may be provided with a respective storage device. The application needed to provide services externally is installed in both the master device and the backup device. In normal operations, the application in the master device of a productive dual-device provides services externally, while the application in the backup device does not function or functions without providing services externally; meanwhile, the backup device backs up the user data in the master device synchronously if the master device and the backup device of the productive dual-device are provided with a respective storage device. When the master device of the productive dual-device malfunctions, the application in the backup device functions and provides services externally. After the malfunctioning master device resumes and may normally provide services externally, data synchronization is performed from the backup device to the master device, so as to implement an inverse data backup for the master device, and then the backup device stops providing services externally. A disaster-recovery device C is additionally configured in the network shown in Figure 1 to provide a disaster-recovery service for the multiple sets of productive dual-device, such as A and B in Figure 1, to deal with a situation that a mast device and the corresponding backup device both malfunction. The application of each productive dual-device is installed in the disaster-recovery device and the disaster-recovery device backs up the user data of each productive dual-device. The backup application in the disaster-recovery device corresponding to the malfunctioning productive dual-device provides services externally if the master device and the backup device in the productive dual-device both malfunction and services cannot continue through a switchover of the master device and the backup device. After the malfunctioning productive dual-device resumes and may normally provide services externally, data synchronization is performed from the corresponding data in the disaster-recovery device to the productive dual-device, and then the disaster-recovery device stops providing services externally.

As can be seen from the above, in the disaster-recovery networking solution adopted in the prior art, a disaster-recovery device with the performance equal to or higher than that of the productive dual-device needs to be newly added, and the requirements on the performance of the disaster-recovery device keep rises with the increase of the number of the productive dual-device. In most cases, the master device in a productive dual-device may operate normally, and the backup device may provide services externally instead of the master device even if the master device malfunctions. When the master device or the backup device in the productive dual-device operate normally, the disaster-recovery device is only used for backing up the data; and the disaster-recovery device provides services externally instead of the productive dual-device temporarily only when the master device and the backup device both malfunction. Services are switched back to the productive dual-device after the productive dual-device resumes the normal operation. In other words, the disaster-recovery device may exert its high performance only in very few cases and cannot exert its high performance in most cases, which leads to a waste of resources. Meanwhile, in the prior art, the disaster-recovery networking may be achieved only when an additional device is added.

US application US 6 098 076 discloses a method of providing service by at least a SCP pair in a system with PHS capacities, when one SCP in a SCP pair becomes inoperable, the other SCP in the SCP pair will take the load of the SCP inoperable.

### Summary of the Invention

In view of the above, the present invention provides a system for service control device disaster-recovery in an intelligent network and a method for service control device disaster-recovery in an intelligent network applied in the system, to achieve disaster-recovery networking for key devices of the intelligent network without any additional device and therefore guarantee the security of the user data and the reliability of the services in the intelligent network while reducing the cost.

The technical solutions of the present invention are achieved as follows.

A system for providing redundancy for the service control device in an intelligent network includes two or more signaling access units for making a productive dual-device, comprising two service control devices: a backup device and a master device, access the signaling network, at least one switching device for composing a data backup network, and at least one signaling transfer point for sending a signaling to the corresponding signaling access unit based on the destination address of the signaling, further includes at least one productive dual-device group, and each productive dual-device group includes:
a first productive dual-device including a first master device and a first backup device, the first master device and the first backup device being simultaneously connected to a first signaling access unit and a first switching device, respectively, wherein the first backup device backs up the user data of the first master device when the first master device operates normally and the second productive dual-device when either the master device or the backup device thereof operates normally, provides services externally instead of the first master device when the first master device malfunctions, and provide services externally instead of the second productive dual-device when the second productive dual-device malfunctions;
a second productive dual-device including a second master device and a first backup device, the first master device and the first backup device being simultaneously connected to a second signaling access unit and the firs switching device, respectively, wherein the second backup device backs up the user data of the second master device when the second master device operates normally, and the first productive dual-device when either the master device or the backup device thereof operates normally, provides services externally instead of the second master device when the second master device malfunctions, and provide services externally instead of the first productive dual-device when the first productive dual-device malfunctions;
each of the signaling transfer points further stores a composition relation of each productive dual-device group connected to the signaling transfer point itself, the relation being used for determining the productive dual-device where the backup device providing services externally instead of a malfunctioning productive dual-device is.

A method for service control device disaster-recovery in an intelligent network, comprising:
connecting a first productive dual-device, comprising two service control devices:
   a first backup device and a first master device, and a second productive dual-device, comprising two service control devices: a second backup device and a second master device, to each other with a data backup network to construct a productive dual-device group;
   backing up, by the first backup device through the data backup network, data of the first master device when the first master device provides services externally, as well as of the second productive dual device, when either the master device or the backup device thereof operates normally;
   backing up, by the second backup device through the data backup network, data of the the second master device, when the second master device provides services externally, as well as of the first productive dual device, when either the master device or the backup device thereof operates normally;
   providing, by the first backup device, services externally instead of the first master device when the first master device malfunctions; and
   providing, by the second backup device in the productive dual-device group, services externally instead of the malfunctioning first productive dual-device when both the first master device and the first backup device malfunction;
   providing, by the second backup device, services externally instead of the second master device when the second master device malfunctions; and
   providing, by the first backup device, services externally instead of the malfunctioning second productive dual-device when both the second master device and the second backup device malfunction.

According to the system and the method for service control device disaster-recovery in the intelligent network in accordance with the present invention, the disaster-recovery of the service control devices in the intelligent network may be achieved using the existing resources in the network without decreasing the disaster-recovery capability of the system, and no additional device is needed, which has the merits of low cost and high efficiency.

### Brief Description of the Drawings

Figure 1 shows a block diagram illustrating a disaster-recovery network adopted in the prior art;
Figure 2 shows a block diagram illustrating the structure of the disaster-recovery network according to an embodiment of the present invention;
Figure 3 shows a flow chart illustrating the operation of the disaster-recovery network according to an embodiment of the present invention.

### Embodiments of the Invention

The key idea of the disaster-recovery system for service control devices in an intelligent network according to the present invention is that a disaster-recovery device of a productive dual-device is a backup device of another productive dual-device. Therefore, the disaster-recovery of the service control devices in the intelligent network is achieved using the existing resources in the network without any additional disaster-recovery device and the disaster-recovery capability of the disaster-recovery system is not changed, which has the merits of low cost and high efficiency.

In order to make the objects, technical solutions and advantages of the present invention clearer, the present invention is hereinafter described in detail with reference to the drawings and embodiments.

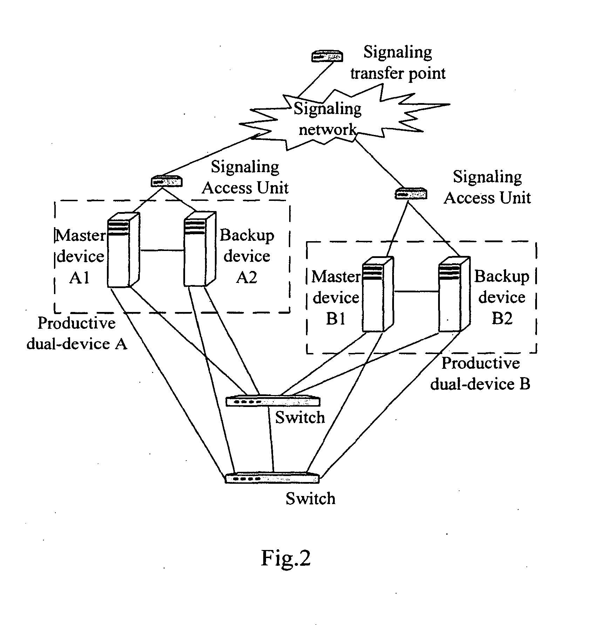

Figure 2 shows a block diagram illustrating the structure of the disaster-recovery network according to an embodiment of the present invention. In this embodiment, two productive dual-devices, which compose a productive dual-device group, are taken as an example. In one embodiment, if the number of the productive dual-devices in the intelligent network is larger than two, every two productive dual-devices may be grouped as a productive dual-device group described in this embodiment. If the number of the productive dual-devices in the intelligent network is odd, there are two solutions. One is to firstly make every two productive dual-devices compose a productive dual-device group and then make the last three productive dual-devices compose a productive dual-device group. The other is to add a productive dual-device to improve the service capacity and compose another productive dual-device group with two productive dual-devices.

Further, in this embodiment, the master device and the backup device of each productive dual-device use separate storage devices such as a disk array.

The disaster-recovery network according to this embodiment includes:
a productive dual-device A including a master device A1 and a backup device A2;
a productive dual-device B including the master device B1 and the backup device B2;
a signaling access unit for connecting a productive dual-device to a signaling network;
a signaling transfer point for forwarding a signaling to a corresponding signaling access unit according to the destination address of the signaling;
a switching device for data exchange between the master device and the backup device in a productive dual-device and between productive dual-devices.

When the master device A1 operates normally, the master device A1 provides services externally and stores the user data of the services, and the backup device A2 backs up the data of the master device A1 and a master device B1; when the master device A1 malfunctions, the backup device A2 provides services externally instead of the master device A1; and when the master device B1 and the backup device B2 of the productive dual-device B both malfunction, the backup device A2 provides services externally instead of a productive dual-device B.

When the master device B1 operates normally, the master device B1 provides services externally and stores the user data of the services, and the backup device B2 backs up the data of the master device A1 and the master device B1; when the master device B1 malfunctions, the backup device B2 provides services externally instead of the master device B1; and when the master device A1 and the backup device A2 of the productive dual-device A both malfunction, the backup device B2 provides services externally instead of the productive dual-device A.

The productive dual-device A and the productive dual-device B access the signaling network through their corresponding signaling access units. Besides the interface with the signaling network, both the master device and the backup device in the productive dual-device have two network interfaces connecting to two switching devices respectively, for backing up data. Therefore, two separate data backup networks are formed. When one data backup network malfunctions, the other data backup network may be used to back up data. The switching devices may be Ethernet switches.

In normal operation, the application in the master device of the productive dual-device provides services externally, while the application in the backup device does not function or functions without providing services externally. The backup devices in the two productive dual-devices back up the data of both master devices in the two productive dual-devices. In Figure 2, the backup device A2 in the productive dual-device A backs up the data of both the master device A1 in the productive dual-device A and the master device B1 in the productive dual-device B; the backup device B2 in the productive dual-device B backs up the data of both the master device A1 in the productive dual-device A and the master device B1 in the productive dual-device B.

The applications needed by the two productive dual-devices to provide services externally are installed in the backup devices in both backup devices of the two productive dual-devices. The master device and the backup device in a productive dual-device are also connected to each other with an additional monitoring channel, through which the backup device monitors whether the master device malfunctions.

The application in the backup device in the productive dual-device functions and provides services externally when the master device in the productive dual-device malfunctions. Data synchronization is performed from the backup device to the master device when the malfunctioning master device resumes and may operate normally. Then, the backup device stops providing services externally and the master device begins again to provide services externally.

If the master device and the backup device in one productive dual-device both malfunction, and services cannot continue through the switchover of the master device and the backup device, the corresponding application in the backup device of the other productive dual-device in the productive dual-device group provides services externally. Once either of the master device and the backup device in the malfunctioning productive dual-device resumes normal operations, data synchronization is performed from the backup device in the other productive dual-device to the resumed device in the malfunctioning productive dual-device. Then, the backup device in the other productive dual-device stops providing services externally instead of the malfunctioning productive dual-device, and the resumed master device or the resumed backup device in the malfunctioning productive dual-device begins to provide services externally. The master device in the malfunctioning productive dual-device provides services externally if the master device and the backup device in the malfunctioning productive dual-device resume at the same time.

The backup device in a productive dual-device may also provide services externally simultaneously instead of the master device in the productive dual-device corresponding to the backup device and the other productive dual-device in the productive dual-device group. For example, when the master device A1 and the backup device A2 in the productive dual-device A, and the master device B1 in the productive dual-device B malfunction at the same time, the backup device B2 in the productive dual-device B simultaneously provides externally the services of both the productive dual-device A and the productive dual-device B.

The signaling transfer point sends a signaling to the corresponding productive dual-device via the signaling access unit. In the present invention, a composition relation of each productive dual-device group, i. e. which productive dual-devices are included in a particular productive dual-device group, is also stored in the signaling transfer point. If the signaling transfer point finds, through monitoring, that the destination signaling point address of a signaling is the signaling point address of a productive dual-device in which both the master device and the backup device malfunction, the signaling transfer point forwards the signaling to the other productive dual-device which is in the same productive dual-device group as the malfunctioning productive dual-device. In this embodiment, the signaling transfer point forwards a signaling with a destination signaling point address of the productive dual-device A to the signaling access unit connected to the productive dual-device B if both the master device and the backup device in the productive dual-device A malfunction.

In one embodiments of the present invention, three productive dual-devices compose a productive dual-device group. For example, the three productive dual-devices are respectively a productive dual-device A, a productive dual-device B, and a productive dual-device C. The backup device B2 in the productive dual-device B provides services externally instead of the productive dual-device A when the master device and the backup device in the productive dual-device A both malfunction; the backup device C2 in the productive dual-device C provides services externally instead of the productive dual-device B when the master device and the backup device in the productive dual-device B both malfunction; and the backup device A2 in the productive dual-device A provides services externally instead of the productive dual-device C when the master device and the backup device in the productive dual-device C both malfunction.

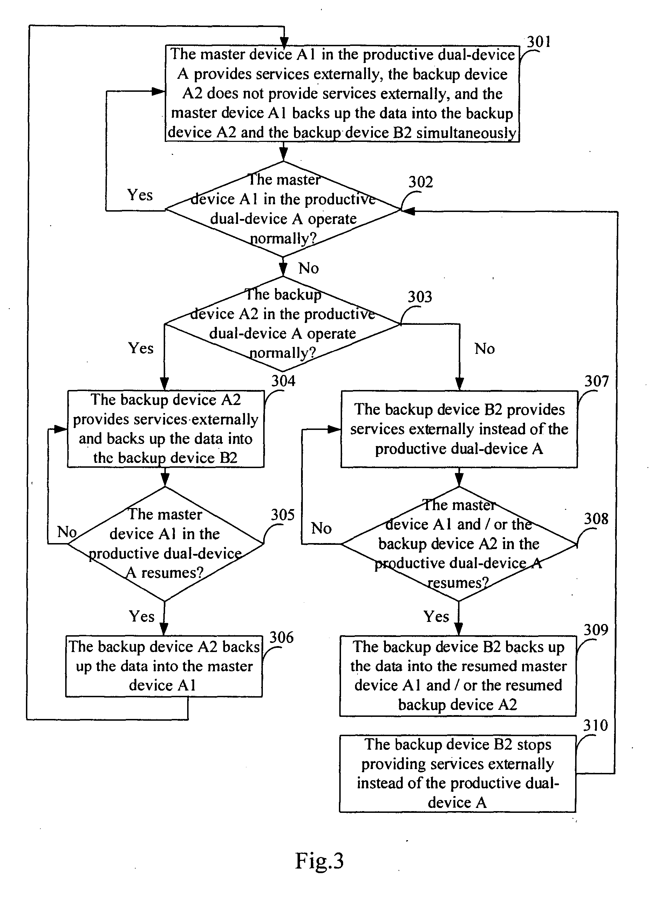

In order to make the process of backup of the disaster-recovery network according to embodiments of the present invention clearer, the operation steps of the disaster-recovery network according to the embodiment of the present invention are hereinafter described with reference to the flow chart. Because in the disaster-recovery network according to the embodiment of the present invention, the two productive dual-devices in a productive dual-device group are equivalent to each other and are the opposite productive dual-device for each other in the productive dual-device group, the disaster-recovery flow of the two productive dual-devices are the same. Therefore, steps are described only by taking the productive dual-device A in the productive dual-device group as the example. Figure 3 shows the flow chart illustrating the operation of the disaster-recovery network according to the embodiment of the present invention.

Block 301: the master device A1 in the productive dual-device A operates normally and the backup device A2 in the productive dual-device A does not provide services externally. When providing services externally, the master device A1 sends the user data to the backup device A2 and the backup device B2 through the network interface via the switching device. Likewise, when providing services externally, the master device B1 sends the user data to the backup device A2 and the backup device B2 through the network interface via the switching device. In other words, for the user data in the master device A1 and the user data in the master device B1, there are two copies of the backup data, which are respectively stored in the two backup devices in the productive dual-device group. Both of the application needed to provide services externally in the productive dual-device A and the application needed to provide services externally in the productive dual-device B are installed in both the backup device A2 and the backup device B2.

Block 302: it is checked whether the master device A1 in the productive dual-device A operates normally; if the master device A1 in the productive dual-device A operates normally, the process returns to Block 301; otherwise, the process continues with Block 303.

Block 303: it is checked whether the backup device A2 in the productive dual-device A operates normally; if the backup device A2 in the productive dual-device A operates normally, the process advances to Block 304; otherwise, the process advances to Block 307.

Block 304: the backup device A2 in the productive dual-device A including the malfunctioning master device A1 begins to provide services externally and backs up the user data into the backup device B2 in the other productive dual-device in the productive dual-device group. The other productive dual-device is the productive dual-device B in this embodiment,

Block 305: it is checked whether the master device A1 resumes its normal operation, if the master device A1 resumes its normal operation, the process advances to Block 306 ; otherwise, the process returns to Block 304.

Block 306: the malfunctioning master device A1 updates its user data according to the corresponding user data in the backup device A2 in the productive dual-device including the malfunctioning master device A1. The backup device A2 sends the user data, which is updated since the master device A1 malfunctions, to the master device A1 through the network interface via the switching device. The process returns to Block 301 after the update is completed.

Block 307: the backup device B2 in the other productive dual-device in the productive dual-device group including the malfunctioning productive dual-device A, provides services externally instead of the malfunctioning productive dual-device A. The other productive dual-device is the productive dual-device B in this embodiment.

Block 308: it is checked whether either of the master device A1 or the backup device A2 in the malfunctioning productive dual-device A resumes the normal operation; if either of the master device A1 or the backup device A2 in the malfunctioning productive dual-device A resumes the normal operation, the process advances to Block 309; otherwise, the process returns to Block 307.

Block 309: in the malfunctioning productive dual-device A, the master device A1 or the backup device A2 which has resumed the normal operation updates its user data according to the user data in the backup device B2 in the other productive dual-device in the productive dual-device group. The other productive dual-device is the productive dual-device B in this embodiment. The backup device B2 in the other productive dual-device stops providing services externally instead of the malfunctioning productive dual-device after the update is completed. The master device A1 or the backup device A2 that has resumed the normal operation in the malfunctioning productive dual-device A begins to provide the services of the productive dual-device A externally and back up the user data into the backup device B2 in the other productive dual-device, i.e. the productive dual-device B. For example, when the master device A1 in the productive dual-device A resumes the normal operation and the backup device A2 is still malfunctioning, the backup device B2 in the productive dual-device B sends the user data, which is updated since the master device A1 in the productive dual-device A malfunctions, to the master device A1 in the productive dual-device A through the network interface via the switching device. The master device A1 in the productive dual-device A begins again to provide services externally and send the user data to the backup device B2 in the productive dual-device B through the network interface via the switching device. Data synchronization between the master device A1 and the backup device A2 is further performed after the backup device A2 in the productive dual-device A resumes the normal operation. The processing is similar if the backup device A2 in the productive dual-device A resumes the normal operation earlier than the master device A1. If the master device A1 and the backup device A2 resume the normal operation at the same time, the master device A1 and the backup device A2 update their user data according to the user data in the backup device B2 in the productive dual-device B simultaneously; the backup device B2 stops providing services externally instead of the productive dual-device A after the update is completed, and the process returns to Block 301.

In Block 307, if besides one productive dual-device, the master device in the other productive dual-device in the productive dual-device group also malfunctions, the backup device in the other productive dual-device provides services externally simultaneously instead of the malfunctioning productive dual-device and the master device in the other productive dual-device. In other words, the backup device simultaneously provides the services of the two productive dual-devices in the productive dual-device group. For example, when the master device A1 and the backup device A2 in the productive dual-device A malfunction and the master device B1 in the productive dual-device B also malfunctions, the backup device B2 in the productive dual-device B not only provides the services of the productive dual-device A externally, but also provides the services of the productive dual-device B externally.

The foregoing description is only preferred embodiments of the present invention and is not for use in limiting the protection scope thereof.

## Claims

1. A system for service control device disaster-recovery in an intelligent network, comprising two or more signaling access units for connecting a respective productive dual-device, comprising two service control devices: a backup device and a master device, to a signaling network, at least one switching device for constructing a data backup network, and at least one signaling transfer point for sending a signaling to a corresponding signaling access unit based on a destination address of the signaling, wherein the system further comprises at least one productive dual-device group, and each productive dual-device group comprises:
a first productive dual-device (A) comprising a first backup device (A2) and a first master device (A1), the first backup device and the first master device both connecting to a first signaling access unit and a first switching device, wherein the first backup device backs up user data of both the first master device when the first master device operates normally, and a second productive dual-device when either the master device or the backup device thereof operates normally, provides services externally instead of the first master device when the first master device malfunctions, and provides services externally instead of the second productive dual-device when the second productive dual-device malfunctions;
the second productive dual-device (B) comprising a second master device (B1) and a second backup device (B2) the second master device and the second backup device both connecting to a second signaling access unit and the first switching device, wherein the second backup device backs up user data of both the second master device when the second master device operates normally and the first productive dual-device when either the master device or the backup device thereof operates normally, provides services externally instead of the second master device when the second master device malfunctions, and provides services externally instead of the first productive dual-device when the first productive dual-device malfunctions;
each of the signaling transfer points further storing a composition relation of each productive dual-device group connected to the signaling transfer point, wherein the composition relation is for determining which productive dual-device include a backup device providing services externally instead of a malfunctioning productive dual-device.

2. The system of Claim 1, further comprising a productive dual-device group including three productive dual-devices, and the productive dual-device group comprising:
a first productive dual-device, comprising a first master device and a first backup device, the first master device and the first backup device both connecting to a first signaling access unit and a first switching device, wherein the first backup device backs up user data of both the first master device when the first master device operates normally and a second productive dual-device when either the master device or the backup device thereof operates normally, provides services externally instead of the first master device when the first master device malfunctions, and provides services externally instead of the second productive dual-device when the second productive dual-device malfunctions;
the second productive dual-device comprising a second master device and a second backup device, the second master device and the second backup device both connecting to a second signaling access unit and the first switching device, wherein the second backup device backs up user data of both the second master device when the second master device operates normally and a third productive dual-device when either the master device or the backup device thereof operates normally, provides services externally instead of the second master device when the second master device malfunctions, and provide services externally instead of the third productive dual-device when the third productive dual-device malfunctions;
a third productive dual-device, comprising a third master device and a third backup device, the third master device and the third backup device both connecting to a third signaling access unit and the first switching device, wherein the third backup device backs up user data of both the third master device when the third master device operates normally and the first productive dual-device when either the master device or the backup device thereof operates normally, provides services externally instead of the third master device when the third master device malfunctions, and provides services externally instead of the first productive dual-device when the first productive dual-device malfunctions.

3. The system of Claim 1 or 2, wherein the productive dual-device is a productive dual-device in which the master device and the backup device share a storage device.

4. The system of Claim 1 or 2, wherein the productive dual-device is a productive dual-device in which the master device and the backup device respectively use a separate device.

5. The system of Claim 1 or 2, wherein the switching device is an Ethernet switch.

6. A method for service control device disaster-recovery in an intelligent network, comprising:
connecting a first productive dual-device, comprising two service control devices: a first backup device and a first master device, and a second productive dual-device, comprising two service control devices: a second backup device and a second master device to each other with a data backup network to construct a productive dual-device group;
backing up, by the first backup device through the data backup network, data of the first master device when the first master device provides services externally as well as of the second productive dual device, when either the master device or the backup device thereof operates normally;
backing up, by the second backup device through the data backup network, data of the the second master device, when the second master device provides services externally, as well as of the first productive dual device, when either the master device or the backup device thereof normally;
providing, by the first backup device, services externally instead of the first master device when the first master device malfunctions (304); and
providing, by the second backup device in the productive dual-device group,, services externally instead of the malfunctioning first productive dual-device when both the first master device and the first backup device malfunction (307);
providing, by the second backup device, services externally instead of the second master device when the second master device malfunctions; and
providing, by the first backup device, services externally instead of the malfunctioning second productive dual-device when both the second master device and the second backup device malfunction.

7. The method of Claim 6, wherein the process of connecting the first productive dual-device and the second productive dual-device to each other with the data backup network to construct the productive dual-device group comprises:
connecting both the master devices and the backup devices in the productive dual-devices to an Ethernet switch.

8. The method of Claim 6, wherein the process of the first backup device providing services externally instead of the first master device when the first master device malfunctions; and the second backup device providing services externally instead of the malfunctioning first productive dual-device when both the first master device and the first backup device malfunction comprises:
checking whether the first backup device operates normally when the first master device malfunctions (303);
providing, by the first backup device, services externally instead of the malfunctioning master device if the first backup device operates normally, and backing up the data into the second backup device (304);
providing, by the second backup device in the productive dual-device group, services externally instead of the malfunctioning first productive dual-device if the first backup device malfunctions (307).

9. The method of Claim 6, after the first backup device providing services externally instead of the malfunctioning master device, further comprising:
performing data synchronization from the first backup device to the resumed master device after the malfunctioning master device resumes (306);
providing, by the resumed master device, services externally, and
stopping, by the first backup device, providing services externally (301).

10. The method of Claim 8, after the process of the second backup device in the productive dual-device group providing services externally instead of the malfunctioning first productive dual-device, further comprising:
performing data synchronization from the backup device in the opposite productive dual-device to the resumed master device and / or the resumed backup device, after the master device and / or the backup device in the malfunctioning first productive dual-device resumes (309);
providing, by the resumed master device or the resumed backup device, services externally; and
stopping, by the second backup device, providing services externally instead of the first productive dual-device (310).

11. The method of Claim 10, wherein the process of performing data synchronization from the backup device in the opposite productive dual-device to the resumed master device and / or the resumed backup device after the master device and / or the backup device in the malfunctioning productive dual-device resumes, and the resumed master device or the resumed backup device providing services externally comprises:
performing data synchronization from the second backup device to the resumed master device if the malfunctioning master device resumes but the malfunctioning backup device does not resume; providing, by the resumed master device, services externally; and performing data synchronization from the resumed master device to the resumed backup device after the malfunctioning backup device resumes; or
performing data synchronization from the second backup device to the resumed backup device if the malfunctioning backup device resumes but the malfunctioning master device does not resume; providing, by the resumed backup device, services externally; and performing data synchronization from the resumed backup device to the resumed master device after the malfunctioning master device resumes; or
performing data synchronization from the second backup device to the resumed master device and the resumed backup device if the malfunctioning master device and the malfunctioning backup device both resume; and providing, by the resumed master device, services externally.

## Patentansprüche

1. System zur Wiederherstellung einer Dienststeuerungsvorrichtung im Notfall in einem intelligenten Netzwerk, das zwei oder mehr Nachrichtenübermittlungs-Zugriffseinheiten, um eine entsprechende produktive Dual-Vorrichtung, die zwei Dienststeuerungsvorrichtungen, eine Backup-Vorrichtung und eine Master-Vorrichtung umfasst, mit einem Nachrichtenübermittlungs-Netzwerk zu verbinden, zumindest eine Umschaltvorrichtung, um ein Datensicherungsnetzwerk einzurichten, und zumindest einen Nachrichtenübermittlungs-Übertragungspunkt, um eine Meldung an eine entsprechende Nachrichtenübermittlungs-Zugriffseinheit, basierend auf einer Zieladresse der Nachrichtenübermittlung zu senden, umfasst, wobei das System ferner zumindest eine produktive Dual-Vorrichtungsgruppe umfasst, und jede produktive Dual-Vorrichtungsgruppe umfasst:
eine erste produktive Dual-Vorrichtung (A), die eine erste Backup-Vorrichtung (A2) und eine erste Master-Vorrichtung (A1) umfasst, wobei die erste Backup-Vorrichtung und die erste Master-Vorrichtung sowohl mit einer ersten Nachrichtenübermittlungs-Zugriffseinheit als auch einer ersten Umschaltvorrichtung verbunden sind, wobei die erste Backup-Vorrichtung Nutzerdaten der ersten Master-Vorrichtung sichert, wenn die erste Master-Vorrichtung normal funktioniert, und eine zweite produktive Dual-Vorrichtung, wenn davon entweder die Master-Vorrichtung oder die Backup-Vorrichtung normal funktioniert, die Dienste, an Stelle der ersten Master-Vorrichtung nach außen bereitstellt, wenn die erste Master-Vorrichtung eine Fehlfunktion aufweist, und die Dienste an Stelle der zweiten produktiven Dual-Vorrichtung nach außen bereitstellt, wenn die zweite produktive Dual-Vorrichtung versagt;
die zweite produktive Dual-Vorrichtung (B), die eine zweite Master-Vorrichtung (B1) und eine zweite Backup-Vorrichtung (B2) umfasst, wobei die zweite Master-Vorrichtung und die zweite Backup-Vorrichtung sowohl mit einer zweiten Nachrichtenübermittlungs-Zugriffseinheit als auch der ersten Umschaltvorrichtung verbunden sind, wobei die zweite Backup-Vorrichtung Nutzerdaten der zweiten Master-Vorrichtung sichert, wenn die zweite Master-Vorrichtung normal funktioniert und die erste produktive Dual-Vorrichtung Dienste an Stelle der zweiten Master-Vorrichtung nach außen bereitstellt, wenn die zweite Master-Vorrichtung eine Fehlfunktion aufweist und die Dienste an Stelle der ersten produktiven Dual-Vorrichtung nach außen bereitstellt, wenn die erste produktive Dual-Vorrichtung versagt;
wobei jeder der Nachrichtenübermittlungs-Übertragungspunkte ferner eine Anordnungsbeziehung in jeder produktiven Dual-Vorrichtungsgruppe speichert, die mit dem Nachrichtenübermittlungs-Übertragungspunkt verbunden ist, wobei die Anordnungsbeziehung dazu dient, um zu bestimmen, welche produktive Dual-Vorrichtung eine Backup-Vorrichtung enthält, die Dienste nach außen bereitstellt an Stelle einer fehl funktionierenden produktiven Dual-Vorrichtung.

2. System nach Anspruch 1, ferner umfassend eine produktive Dual-Vorrichtungsgruppe, die drei produktive Dual-Vorrichtungen umfasst, und wobei die produktive Dual-Vorrichtungsgruppe umfasst:
eine erste produktive Dual-Vorrichtung, die eine erste Master-Vorrichtung und eine erste Backup-Vorrichtung umfasst, wobei die erste Master-Vorrichtung und die erste Backup-Vorrichtung sowohl mit einer ersten Nachrichtenübermittlungs-Zugriffseinheit als auch einer ersten Umschaltvorrichtung verbunden sind, wobei die erste Backup-Vorrichtung Nutzerdaten der ersten Master-Vorrichtung speichert, wenn die erste Master-Vorrichtung normal funktioniert, und eine zweite produktive Dual-Vorrichtung, wenn entweder deren Master-Vorrichtung oder deren Backup-Vorrichtung normal funktioniert, Dienste an Stelle der ersten Master-Vorrichtung nach außen bereitstellt, wenn die erste Master-Vorrichtung versagt, und an Stelle der zweiten produktiven Dual-Vorrichtung Dienste nach außen bereitstellt, wenn die zweite produktive Dual-Vorrichtung versagt;
die zweite produktive Dual-Vorrichtung, die eine zweite Master-Vorrichtung und eine zweite Backup-Vorrichtung umfasst, wobei die zweite Master-Vorrichtung und die zweite Backup-Vorrichtung sowohl mit einer zweiten Nachrichtenübermittlungs-Zugriffseinheit als auch der ersten Umschalteinheit verbunden sind, wobei die zweite Backup-Vorrichtung Nutzerdaten der zweiten Master-Vorrichtung sichert, wenn die zweite Master-Vorrichtung normal funktioniert, und eine dritte produktive Dual-Vorrichtung, wenn entweder deren Master-Vorrichtung oder deren Backup-Vorrichtung normal funktioniert, Dienste an Stelle der zweiten Master-Vorrichtung nach außen bereitstellt, wenn die zweite Master-Vorrichtung versagt, und an Stelle der dritten produktiven Dual-Vorrichtung Dienste nach außen bereitstellt, wenn die dritte produktive Dual-Vorrichtung versagt;
eine dritte produktive Dual-Vorrichtung, die eine dritte Master-Vorrichtung und eine dritte Backup-Vorrichtung umfasst, wobei die dritte Master-Vorrichtung und die dritte Backup-Vorrichtung sowohl mit einer dritten Nachrichtenübermittlungs-Zugriffseinheit als auch der ersten Umschaltvorrichtung verbunden sind, wobei die dritte Backup-Vorrichtung Nutzerdaten der dritten Master-Vorrichtung sichert, wenn die dritte Master-Vorrichtung normal funktioniert, und die erste produktive Dual-Vorrichtung, wenn entweder deren Master-Vorrichtung oder deren Backup-Vorrichtung normal funktioniert, an Stelle der dritten Master-Vorrichtung Dienste nach außen bereitstellt, wenn die dritte Master-Vorrichtung versagt, und Dienste nach außen an Stelle der ersten produktiven Dual-Vorrichtung bereitstellt, wenn die erste produktive Dual-Vorrichtung versagt.

3. System nach Anspruch 1 oder 2, wobei die produktive Dual-Vorrichtung eine produktive Dual-Vorrichtung ist, in der die Master-Vorrichtung und die Backup-Vorrichtung eine Speichervorrichtung teilen.

4. System nach Anspruch 1 oder 2, wobei die produktive Dual-Vorrichtung eine produktive Dual-Vorrichtung ist, in der die Master-Vorrichtung und die Backup-Vorrichtung jeweils eine getrennte Vorrichtung verwenden.

5. System nach Anspruch 1 oder 2, wobei die Umschaltvorrichtung ein Ethernet-Schalter ist.

6. Verfahren zur Wiederherstellung einer Dienststeuerungsvorrichtung im Notfall in einem intelligenten Netzwerk, umfassend:
Verbinden einer ersten produktiven Dual-Vorrichtung, die zwei Dienststeuerungsvorrichtungen umfasst: eine erste Backup-Vorrichtung und eine erste Master-Vorrichtung, und einer zweiten produktiven Dual-Vorrichtung, die zwei Dienststeuerungsvorrichtungen umfasst: eine zweite Backup-Vorrichtung und eine zweite Master-Vorrichtung, miteinander mit einem Datensicherungsnetzwerk, um eine produktive Dual-Vorrichtungsgruppe aufzubauen;
Sichern durch die erste Backup-Vorrichtung durch das Datenbackup-Netzwerk von Daten der ersten Master-Vorrichtung, wenn die erste Master-Vorrichtung Dienste nach außen bereitstellt, sowie von der zweiten produktiven Dual-Vorrichtung, wenn entweder deren Master-Vorrichtung oder deren Backup-Vorrichtung normal funktioniert;
Sichern durch die zweite Backup-Vorrichtung durch das Datensicherungsnetzwerk von Daten der zweiten Master-Vorrichtung, wenn die zweite Master-Vorrichtung Dienste nach außen bereitstellt, sowie von der ersten produktiven Dual-Vorrichtung, wenn entweder deren Master-Vorrichtung oder deren Backup-Vorrichtung normal funktioniert;
Bereitstellen von Diensten nach außen durch die erste Backup-Vorrichtung an Stelle der ersten Master-Vorrichtung, wenn die erste Master-Vorrichtung versagt (304); und
Bereitstellen von Diensten nach außen durch die zweite Backup-Vorrichtung in der produktiven Dual-Vorrichtungsgruppe an Stelle der fehl funktionierenden ersten produktiven Dual-Vorrichtung, wenn sowohl die erste Master-Vorrichtung als auch die erste Backup-Vorrichtung versagen (307);
Bereitstellen von Diensten durch die zweite Backup-Vorrichtung an Stelle der zweiten Master-Vorrichtung nach außen, wenn die zweite Master-Vorrichtung versagt; und
Bereitstellen von Diensten durch die erste Backup-Vorrichtung an Stelle der fehl funktionierenden zweiten produktiven Dual-Vorrichtung nach außen, wenn sowohl die zweite Master-Vorrichtung als auch die zweite Backup-Vorrichtung versagen.

7. Verfahren nach Anspruch 6, wobei der Verbindungsprozess der ersten produktiven Dual-Vorrichtung und der zweiten produktiven Dual-Vorrichtung miteinander mit dem Datensicherungsnetzwerk, um die produktive Dual-Vorrichtungsgruppe aufzubauen, umfasst:
Verbinden von sowohl den Master-Vorrichtungen als auch den Backup-Vorrichtungen in den produktiven Dual-Vorrichtungen mit einem Ethernet-Schalter.

8. Verfahren nach Anspruch 6, wobei der Vorgang des Bereitstellens von Diensten durch die erste Backup-Vorrichtung nach außen an Stelle der ersten Master-Vorrichtung, wenn die erste Master-Vorrichtung versagt, und das Bereitstellen von Diensten durch die zweite Backup-Vorrichtung nach außen an Stelle der fehl funktionierenden ersten produktiven Dual-Vorrichtung, wenn sowohl die erste Master-Vorrichtung als auch die erste Backup-Vorrichtung versagen, umfasst:
Überprüfen, ob die erste Backup-Vorrichtung normal funktioniert, wenn die erste Master-Vorrichtung versagt (303);
Bereitstellen von Diensten durch die erste Backup-Vorrichtung an Stelle der fehl funktionierenden Master-Vorrichtung nach außen, falls die erste Backup-Vorrichtung normal funktioniert, und Sichern der Daten in der zweiten Backup-Vorrichtung (304); Bereitstellen von Diensten durch die zweite Backup-Vorrichtung in der produktiven Dual-Vorrichtungsgruppe an Stelle der fehl funktionierenden ersten produktiven Dual-Vorrichtung nach außen, falls die erste Backup-Vorrichtung versagt (307).

9. Verfahren nach Anspruch 6, nach Bereitstellen von Diensten durch die erste Backup-Vorrichtung an Stelle der fehl funktionierenden Master-Vorrichtung nach außen, ferner umfassend:
Durchführen von Datensynchronisierung von der ersten Backup-Vorrichtung zu der neu gestarteten Master-Vorrichtung, nachdem die fehl funktionierende Master-Vorrichtung neu startet (306);
Bereitstellen von Diensten durch die neu gestartete Master-Vorrichtung und nach außen
Beenden durch die erste Backup-Vorrichtung der Bereitstellung von nach außen bereitgestellten Diensten (301).

10. Verfahren nach Anspruch 8, nach dem Vorgang des Bereitstellens von Diensten nach außen durch die zweite Backup-Vorrichtung in der produktiven Dual-Vorrichtungsgruppe an Stelle der fehl funktionierenden ersten produktiven Dual-Vorrichtung, ferner umfassend:
Durchführen von Datensynchronisierung von der Backup-Vorrichtung in der gegenseitigen produktiven Dual-Vorrichtung zu der neu gestarteten Master-Vorrichtung und/oder der neu gestarteten Backup-Vorrichtung, nachdem die Master-Vorrichtung und/oder die Backup-Vorrichtung der fehl funktionierenden ersten produktiven Dual-Vorrichtung neu startet (309);
Bereitstellen durch die neu gestartete Master-Vorrichtung oder die neu gestartete Backup-Vorrichtung von nach außen bereitgestellten Diensten; und
Beenden durch die zweite Backup-Vorrichtung des Bereitstellens von Diensten an Stelle der ersten produktiven Dual-Vorrichtung (310) nach außen.

11. Verfahren nach Anspruch 10, wobei der Vorgang des Durchführens von Datensynchronisierung von der Backup-Vorrichtung in der gegenüberliegenden produktiven Dual-Vorrichtung zu der neu gestarteten Master-Vorrichtung und/oder der neu gestarteten Backup-Vorrichtung, nachdem die Master-Vorrichtung und/oder Backup-Vorrichtung in der fehl funktionierenden produktiven Dual-Vorrichtung neu gestartet wurde, und das Bereitstellen von Diensten nach außen durch die neu gestartete Master-Vorrichtung oder die neu gestartete Backup-Vorrichtung umfasst:
Durchführen von Datensynchronisierung von der zweiten Backup-Vorrichtung zu der neu gestarteten Master-Vorrichtung, falls die fehl funktionierende Master-Vorrichtung neu startet, aber die fehl funktionierende Backup-Vorrichtung nicht neu startet; Bereitstellen durch die neu gestartete Master-Vorrichtung von Diensten nach außen und
Durchführen von Datensynchronisierung von der neu gestarteten Master-Vorrichtung zu der neu gestarteten Backup-Vorrichtung, nachdem die fehl funktionierende Backup-Vorrichtung neu gestartet wurde; oder
Durchführen von Datensynchronisierung von der zweiten Backup-Vorrichtung zu der neu gestarteten Backup-Vorrichtung, falls die fehl funktionierende Backup-Vorrichtung neu startet, jedoch die fehl funktionierende Master-Vorrichtung nicht neu startet;
Bereitstellen durch die neu gestartete Backup-Vorrichtung von Diensten nach außen und Durchführen von Datensynchronisierung von der neu gestarteten Backup-Vorrichtung zu der neu gestarteten Master-Vorrichtung, nachdem die fehl funktionierende Master-Vorrichtung neu startet; oder
Durchführen von Datensynchronisierung von der zweiten Backup-Vorrichtung zu der neu gestarteten Master-Vorrichtung und der neu gestarteten Backup-Vorrichtung, falls die fehl funktionierende Master-Vorrichtung und die fehl funktionierende Backup-Vorrichtung beide neu starten; und durch die neu gestartete Master-Vorrichtung Bereitstellen von Diensten nach außen.

## Revendications

1. Système de récupération sur sinistre de dispositif de commande de service dans un réseau intelligent comprenant deux ou plusieurs unités d'accès de signalisation pour la connection d'un dispositif double productif respectif, comprenant deux dispositifs de commande de service: un dispositif de secours et un dispositif maître, à un réseau de signalisation, au moins un dispositif de commutation pour construire un réseau de secours de données, et au moins un point de transfert de signalisation pour émettre une signalisation à une unité d'accès de signalisation correspondante basée sur une adresse de destination de la signalisation, où le système comprend en outre au moins un groupe de dispositifs doubles productifs et chaque groupe de dispositifs doubles productifs comprend:
un premier dispositif double productif (A) comprenant un premier dispositif de secours (A2) et un premier dispositif maître (A1), le premier dispositif de secours et le premier dispositif maître étant reliés à une première unité d'accès de signalisation et un premier dispositif de commutation, où le premier dispositif de secours sauvegarde des données d'utilisateur à la fois du premier dispositif maître, lorsque le premier dispositif maître fonctionne normalement, et un deuxième dispositif double productif, lorsque le deuxième dispositif maître fonctionne normalement, fournit des services à l'extérieur à la place du premier dispositif maître lorsque le premier dispositif maître est défaillant, et fournit des services à l'extérieur à la place du deuxième dispositif double productif lorsque le deuxième dispositif double productif est défaillant;
le deuxième dispositif double productif (B) comprenant un deuxième dispositif maître (B1) et un deuxième dispositif de secours (B2), le deuxième dispositif maître et le deuxième dispositif de secours étant reliés tous les deux à une deuxième unité d'accès de signalisation et au premier dispositif de commutation, où le deuxième dispositif de secours sauvegarde des données d'utilisateur à la fois du deuxième dispositif maître lorsque le deuxième dispositif maître fonctionne normalement, et le premier dispositif double productif fournit des services à l'extérieur à la place du deuxième dispositif maître lorsque le deuxième dispositif maître est défaillant, et fournit des services à l'extérieur à la place du premier dispositif double productif lorsque le premier dispositif double productif est défaillant;
chacun des points de transfert de signalisation stockant en outre une relation de composition de chaque groupe de dispositifs doubles productifs reliés au point de transfert de signalisation, où la relation de composition est prévue pour déterminer le dispositif double productif qui comprend un dispositif de secours fournissant des services à l'extérieur à la place d'un dispositif double productif défaillant.

2. Système selon la revendication 1, comprenant en outre un groupe de dispositifs doubles productifs incluant trois dispositifs doubles productifs, et le groupe de dispositifs doubles productifs comprenant:
un premier dispositif double productif, comprenant un premier dispositif maître et un premier dispositif de secours, le premier dispositif maître et le premier dispositif de secours étant reliés à la fois à une première unité d'accès de signalisation et un premier dispositif de commutation, où le premier dispositif de secours sauvegarde des données d'utilisateur à la fois du premier dispositif maître, lorsque le premier dispositif maître fonctionne normalement, et un deuxième dispositif double productif lorsque soit le dispositif maître, soit le dispositif de secours de celui-ci fonctionne normalement, fournit des services à l'extérieur à la place du premier dispositif maître lorsque le premier dispositif maître est défaillant, et fournit des services à l'extérieur à la place du deuxième dispositif double productif lorsque le deuxième dispositif double productif est défaillant;
le deuxième dispositif double productif comprenant un deuxième dispositif maître et un deuxième dispositif de secours, le deuxième dispositif maître et le deuxième dispositif de secours étant reliés tous les deux à une deuxième unité d'accès de signalisation et au premier dispositif de commutation, où le deuxième dispositif de secours sauvegarde des données d'utilisateur à la fois du deuxième dispositif maître, lorsque le deuxième dispositif maître fonctionne normalement, et un troisième dispositif double productif fournit des services à l'extérieur à la place du deuxième dispositif maître lorsque le deuxième dispositif maître est défaillant, et fournit des services à l'extérieur à la place du troisième dispositif double productif lorsque le troisième dispositif double productif est défaillant;
un troisième dispositif double productif, comprenant un troisième dispositif maître et un troisième dispositif de secours, le troisième dispositif maître et le troisième dispositif de secours étant reliés tous les deux à une troisième unité d'accès de signalisation et au premier dispositif de commutation, où le troisième dispositif de secours sauvegarde des données d'utilisateur à la fois du troisième dispositif maître, lorsque le troisième dispositif maître fonctionne normalement, et le premier dispositif double productif lorsque soit le dispositif maître, soit le dispositif de secours de celui-ci fonctionne normalement, fournit des services à l'extérieur à la place du troisième dispositif maître lorsque le troisième dispositif maître est défaillant et fournit des services à l'extérieur à la place du premier dispositif double productif lorsque le premier dispositif double productif est défaillant.

3. Système selon la revendication 1 ou 2, où le dispositif double productif est un dispositif double productif dans lequel le dispositif maître et le dispositif de secours se partagent un dispositif de stockage.

4. Système selon la revendication 1 ou 2, où le dispositif double productif est un dispositif double productif dans lequel le dispositif maître et le dispositif de secours utilisent respectivement un dispositif séparé.

5. Système selon la revendication 1 ou 2, dans lequel le dispositif de commutation est un commutateur Ethernet.

6. Procédé de récupération sur sinistre de dispositif de commande de service dans un réseau intelligent, comprenant:
connecter un premier dispositif double productif, comprenant deux dispositifs de commande de service; un premier dispositif de secours et un premier dispositif maître, et un deuxième dispositif double productif, comprenant deux dispositifs de commande de service: un deuxième dispositif de secours et un deuxième dispositif maître, l'un à l'autre avec un réseau de sauvegarde de données pour construire un groupe de dispositifs doubles productifs;
sauvegarder, par le premier dispositif de secours par le réseau de sauvegarde de données, des données du premier dispositif maître lorsque le premier dispositif maître fournit des services à l'extérieur, ainsi que du deuxième dispositif double productif lorsque soit le dispositif maître soit le dispositif de secours de celui-ci fonctionne normalement;
sauvegarder, par le deuxième dispositif de secours par le réseau de sauvegarde de données, des données du deuxième dispositif maître, lorsque le deuxième dispositif maître fournit des services à l'extérieur, ainsi que du premier dispositif double productif lorsque soit le dispositif maître soit le dispositif de secours de celui-ci fonctionne normalement;
fournir, par le premier dispositif de secours, des services à l'extérieur à la place du premier dispositif maître lorsque le premier dispositif maître est défaillant (304); et
fournir, par le deuxième dispositif de secours dans le groupe de dispositifs doubles productifs, des services à l'extérieur à la place du premier dispositif double productif défaillant lorsqu'à la fois le premier dispositif maître et le premier dispositif de secours sont défaillants (307);
fournir, par le deuxième dispositif de secours, des services à l'extérieur à la place du deuxième dispositif maître lorsque le deuxième dispositif maître est défaillant; et
fournir, par le premier dispositif de secours, des services à l'extérieur à la place du deuxième dispositif double productif défaillant lorsqu'à la fois le deuxième dispositif maître et le deuxième dispositif de secours sont défaillants.

7. Procédé selon la revendication 6, dans lequel le processus de connection du premier dispositif double productif et du deuxième dispositif double productif l'un à l'autre avec le réseau de sauvegarde de données pour construire le groupe de dispositifs doubles productifs comprend:
connecter à la fois les dispositifs maîtres et les dispositifs de secours dans les dispositifs doubles productifs à un commutateur Ethernet.

8. Procédé selon la revendication 6, où le processus du premier dispositif de secours fournissant des services à l'extérieur à la place du premier dispositif maître lorsque le premier dispositif maître est défaillant; et le deuxième dispositif de secours fournissant des services à l'extérieur à la place du premier dispositif double productif défaillant lorsqu'à la fois le premier dispositif maître et le premier dispositif de secours sont défaillants comprend:
vérifier si le premier dispositif de secours fonctionne normalement lorsque le premier dispositif maître est défaillant (303);
fournir, par le premier dispositif de secours, des services à l'extérieur à la place du dispositif maître défaillant si le premier dispositif de secours fonctionne normalement, et sauvegarder les données dans le deuxième dispositif de secours (304);
fournir, par le deuxième dispositif de secours dans le groupe de dispositifs doubles productifs, des services à l'extérieur à la place du premier dispositif double productif défaillant si le premier dispositif de secours est défaillant (307).

9. Procédé selon la revendication 6, après que le premier dispositif de secours a fourni des services extérieurement à la place du dispositif maître défaillant, comprenant en outre:
procéder à une synchronisation des données du premier dispositif de secours au dispositif maître repris après la reprise du dispositif maître défaillant (306);
fournir, par le dispositif maître repris, des services extérieurement et
arrêter, par le premier dispositif de secours, la fourniture de services extérieurement (301).

10. Procédé selon la revendication 8, après que le processus du deuxième dispositif de secours dans le groupe de dispositifs doubles productifs a fourni des services à l'extérieur à la place du premier dispositif double productif défaillant, comprenant en outre:
procéder à une synchronisation des données du dispositif de secours dans le dispositif double productif opposé au dispositif maître repris et/ou au dispositif de secours repris après que le dispositif maître et/ou le dispositif de secours dans le premier dispositif double productif défaillant ont repris (309);
fournir, par le dispositif maître repris et le dispositif de secours repris, des services extérieurement; et
arrêter, par le deuxième dispositif de secours, la fourniture de services extérieurement à la place du premier dispositif double productif (310).

11. Procédé selon la revendication 10, où le processus de l'exécution de la synchronisation des données du dispositif de secours dans le dispositif double productif opposé au dispositif maître repris et/ou au dispositif de secours repris après la reprise du dispositif maître et/ou du dispositif de secours dans le dispositif double productif défaillant, et le dispositif maître repris ou le dispositif de secours repris fournissant des services extérieurement comprend:
procéder à une synchronisation des données du deuxième dispositif de secours au dispositif maître repris si le dispositif maître défaillant reprend mais que le dispositif de secours défaillant ne reprend pas;
fournir, par le dispositif maître repris, des services extérieurement; et procéder à une synchronisation des données du dispositif maître repris au dispositif de secours repris après la reprise du dispositif de secours défaillant; ou
exécuter une synchronisation des données du deuxième dispositif de secours au dispositif de secours repris si le dispositif de secours défaillant a repris mais que le dispositif maître défaillant n'a pas repris; fournir, par le dispositif de secours repris, des services extérieurement; et procéder à une synchronisation des données du dispositif de secours repris au dispositif maître repris après la reprise du dispositif maître défaillant; ou
procéder à une synchronisation des données du deuxième dispositif de secours au dispositif maître repris et au dispositif de secours repris si le dispositif maître défaillant et le dispositif de secours défaillant reprennent tous les deux; et fournir, par le dispositif maître repris, des services extérieurement.
